# EUROPEAN PATENT APPLICATION

(11) **EP 4 847 536 A1**
(43) Date of publication of application: **02.12.2026**
(21) Application number: 25179631.4
(22) Date of filing: 28.05.2025
(51) Int. Cl.: C08B 37/00, C08L 5/00, C08L 5/12

(54) **ALGAL POLYSACCHARIDE DERIVATIVE**

(71) Applicant: Noriware AG, 5242 Lupfig (CH)
(72) Inventor: Rakhshi, Elham Martin, 5242 Lupfig (CH); DiBello, Genny, 5242 Lupfig (CH); Zweifel, Lucian, 5242 Lupfig (CH); Widner, Daniel, 5242 Lupfig (CH); Farda, Jessica, 5242 Lupfig (CH); Grieder, Stefan, 5242 Lupfig (CH)
(74) Representative: Schaad, Balass, Menzl & Partner AG

(57) **Abstract**

Algal polysaccharide derivative comprising a repeating unit according to formula (I) 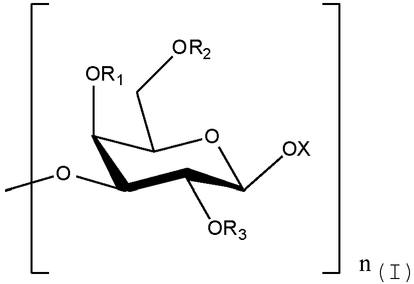 wherein X is one of the compounds of formula (II), (III) or (IV), 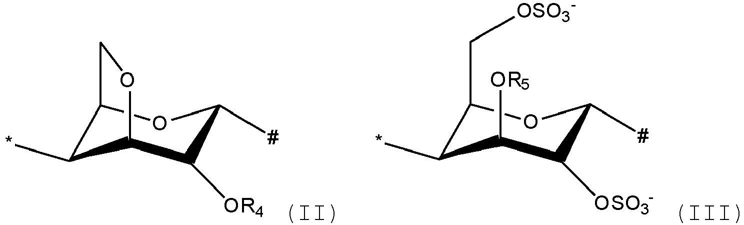 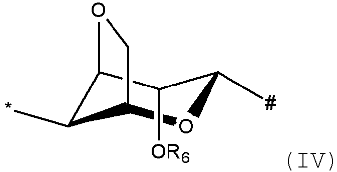 wherein R₁, R₃ and R₄ are independently selected from the group consisting of -H, -Y, and -SO₃⁻, and
wherein R₂, R₅ and R₆ are independently selected from the group consisting of -H and -Y, and
wherein Y is a compound of formula (V), 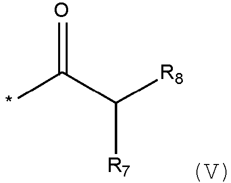 wherein R₇ is -H or -COO⁻, and
wherein R₈ is an C₆ - C₁₆ alkyl or a C₆ - C₁₆ alkenyl, and
wherein "*" denotes the point of attachment to the remainder of the molecule, and
wherein "#" denotes the point of attachment to a further repeating unit, and
wherein n is the number of repeating units in the algal polysaccharide and is between 400 and 1600, and
wherein Y is present on average in each repeating unit at least 0.8 times.

## Description

In the realm of modern commerce and product distribution, packaging materials serve a critical role in protecting goods, extending shelf life, and facilitating the efficient transport of a wide array of items. Historically, plastics have dominated the packaging industry, prized for their versatility, durability, and cost-effectiveness. However, the pervasive use of plastic packaging has precipitated an array of environmental challenges that are increasingly urgent to address. The non-biodegradable nature of many plastics has led to significant pollution issues, including the accumulation of plastic waste in natural habitats, waterways, and oceans, contributing to the degradation of ecosystems and harm to wildlife. Additionally, the production and disposal of plastic packaging materials contribute to greenhouse gas emissions, exacerbating the global climate crisis.

Despite growing awareness and efforts to mitigate these impacts through recycling and the development of biodegradable plastics, current solutions have been insufficient in addressing the scale of the problem. Limitations in recycling infrastructure, the complexity of plastic polymers, and the continued reliance on non-renewable resources for production underscore the need for innovative approaches in packaging materials.

Among the myriad of materials explored for sustainable packaging, polysaccharides stand out due to their biodegradability, abundance, and renewable nature. Polysaccharides are polymers consisting of long chains of monosaccharide units bound by glycosidic linkages, occurring naturally in plants, animals, and microorganisms. Their inherent biocompatibility and environmental friendliness make polysaccharides an attractive basis for developing alternative packaging solutions.

A prominent polysaccharide is starch, found abundantly in nature and easily extractable from various plants, including corn, potatoes, and wheat, offers a particularly compelling foundation for eco-friendly packaging materials. Its properties, such as gelatinization and film-forming ability, provide a versatile platform for creating a wide range of packaging formats, from rigid containers to flexible films.

However, packaging materials originating from starch have several disadvantages. Starch is primarily derived from agricultural crops such as corn, wheat, and potatoes, which require arable land, freshwater, and other agricultural inputs such as fertilizers or pesticides for cultivation. This can lead to competition with food production, contribute to deforestation, and exacerbate water scarcity. Additionally, films from starch often exhibit poor mechanical properties and are naturally prone to retrogradation, returning to a more crystalline, starch-like structure over time.

As an alternative to starch other polysaccharides were explored such as algal polysaccharides. These include alginic acid and its salts, carrageenans, agars, fucoidans, laminarans and ulvans which can be extracted from brown, red or green seaweed respectively. The different algal polysaccharides possess similar chemical structure but with different functional groups which give them different properties (Lomartire 2022).

Being a natural material, based on the exact species, regional environment, seasonality and extraction conditions, the polysaccharides exhibit differences in purity, molecular weight, and building blocks. These algal polysaccharides have several advantages. For example, algae grow at a significantly faster rate than terrestrial plants used for starch extraction. They can be harvested more frequently, offering a higher yield of biomass and polysaccharides per acre compared to conventional crops like corn or potatoes. Furthermore, cultivating algae for polysaccharides requires fewer resources than growing starch-producing crops. Algae can thrive in various water environments, including brackish and seawater, reducing the demand for freshwater - a critical advantage in water-scarce regions. Furthermore, algae cultivation does not require arable land, thus not competing with food production or contributing to deforestation. While algae partially sequester carbon dioxide as part of their photosynthetic process, followed by deposition of dead algal matter on the seafloor, they play an even more important role for protecting the environment by cleaning the ocean water and providing nutrients and shelter for a lot of different species of the underwater flora and fauna.

Algae-based polysaccharides are biodegradable, breaking down into non-toxic, natural components. However, the specific environmental conditions required for degradation and the degradation rate can vary, potentially offering more control over the lifespan of the packaging based on the choice of algae species and processing methods.

While algae-based polysaccharides present a promising alternative for sustainable packaging solutions due to their film forming ability, high biodegradability, biocompatibility, high oxygen barrier and the regenerative effect and low resource consumption of algae there are several challenges and limitations that currently hinder their widespread adoption.

One of the primary challenges is scaling up the production of algae-based polysaccharides to meet industrial demands while maintaining cost-effectiveness. To allow for efficient scale-up and enable the use of conventional polymer processing techniques to produce packaging materials, such as compounding, film extrusion, blow molding, film casting, heat sealing and more, materials based on algal polysaccharides need to exhibit a certain degree of plastic behavior, thermoplasticity or formability. Present attempts to make polysaccharides such as starch, alginate, carrageenan, or agar moldable and thermoplastic involve the addition of preferably biobased plasticizers such as glycerol, sorbitol, polyethylene glycol, polyols, citric acid, urea or others followed by thorough mixing at elevated temperature to obtain so-called thermoplastic starch or thermoplastic alginate.

However, it is important to understand that some of these so-called thermoplastic materials can only be processed and melted by a combination of heat and shear due to strong intermolecular forces. These modified polysaccharides should be called "mechano-thermoplastic" since they require the modified polysaccharides to be mechanically treated (for example be kneading) while being heated to obtain a thermoplastic behavior. These "mechano-thermoplastic" polysaccharides have the disadvantage that low melting point plasticizers such as glycerol can migrate out of the material over time resulting in phase separation and embrittlement. Furthermore these "mechano-thermoplastic" polysaccharides are still prone to humidity, have a high-water uptake and are not water-resistant which limits their use in broad packaging applications. Attempts to overcome these challenges by blending such plasticized polysaccharides with polymers such as PP, PE, PS, or PVA result in drawbacks such as the feedstock being fossil-based or decreased recyclability.

The problem solved by the invention is to provide a modified algal polysaccharide, that exhibits sufficient water stability and can be implemented into existing plastic manufacturing processes.

The problem is solved by the inventive modified algal polysaccharide according to Claim 1 and a process for producing a modified algal polysaccharide according to Claim 4. Preferred embodiments are the subject of the dependent Claims.

The present invention relates to an algal polysaccharide derivative comprising a repeating unit according to formula (I) 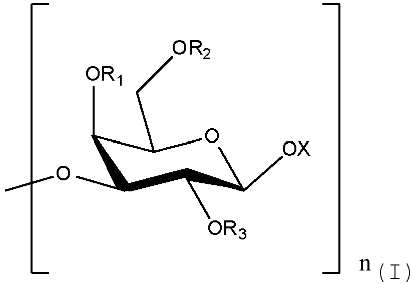 wherein X is one of the compounds of formula (II), (III) or (IV), 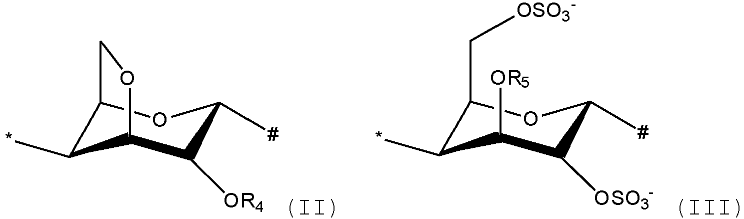 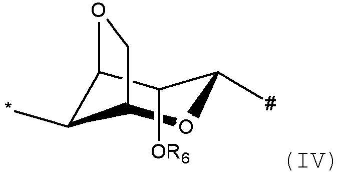
wherein R₁, R₃ and R₄ are independently selected from the group consisting of -H, -Y, and -SO₃⁻, and
wherein R₂, R₅ and R₆ are independently selected from the group consisting of -H and -Y, and
wherein Y is a compound of formula (V), 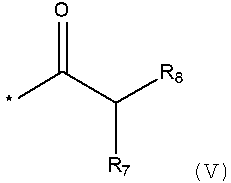
wherein R₇ is -H or -COO⁻, and
wherein R₈ is an C₆ - C₁₆ alkyl or a C₆ - C₁₆ alkenyl, and
wherein "*" denotes the point of attachment to the remainder of the molecule, and
wherein "#" denotes the point of attachment to a further repeating unit, and
wherein n is the number of repeating units in the algal polysaccharide and is between 400 and 1600, and
wherein Y is present on average in each repeating unit at least 0.8 times.

In the context of the invention the term "point of attachment to the remainder of the molecule" is understood as the point where the compound of formula (II) - (IV) is attached to the OX residue of compound (I). The point of attachment to the remainder of the molecule is further explained on the following example: A compound of formula (II) is attached to repeating unit of formula (I), the repeating unit has the following formula (IIa):

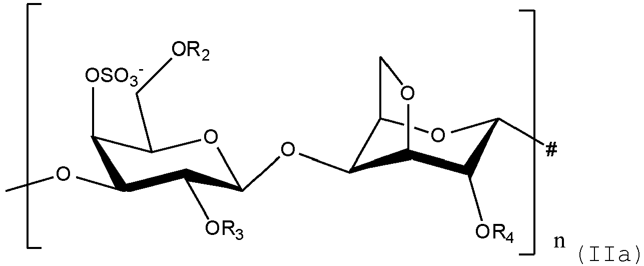

In the context of the invention the term "the point of attachment to a further repeating unit" is understood as the point where the repeating unit is attached to a further repeating unit. The point of attachment to a further repeating unit is further explained on the following example: A repeating unit of formula (IIaH) as shown above, is connected on both ends to repeating units of formula (IIaH).

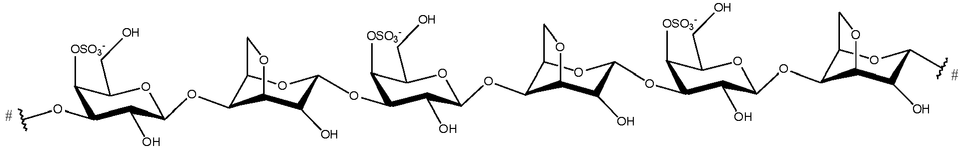

In the context of the invention the term "Y is present on average in each repeating unit" is understood as the average time the residue Y is present in the repeating unit. This is further explained on the following example: In the repeating unit (IIaY) Y is present 1 time.

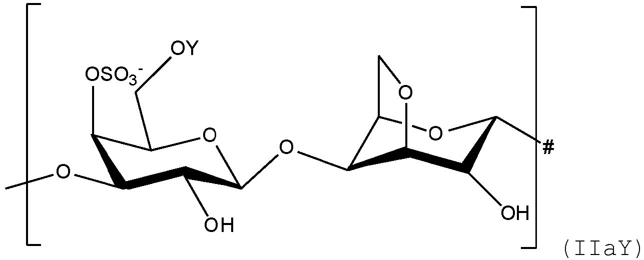

In the repeating unit (IIaYY) Y is present 2 times.

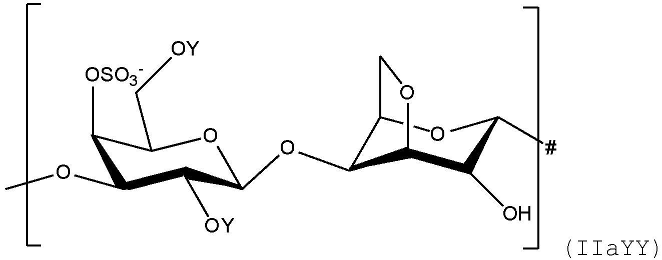

If the repeating units (IIaY) and (IIaYY) are connected to form a compound (IIaYYY), Y is present on average in (IIaYYY) 1.5 times.

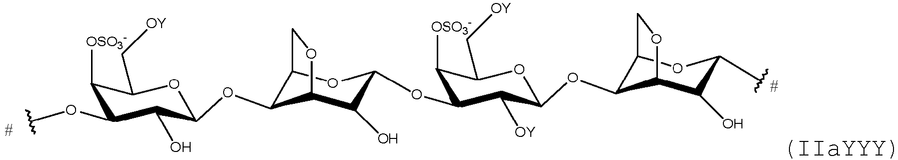

The inventive algal polysaccharide derivative has an exceptional thermoplastic behavior, a processing temperature between 80 - 160 °C, a rheological behavior comparable to Poly(methyl methacrylate) (PMMA) and is significantly hydrophobic.

Preferably the algal polysaccharide derivative comprising a repeating unit according to formula (IIa) 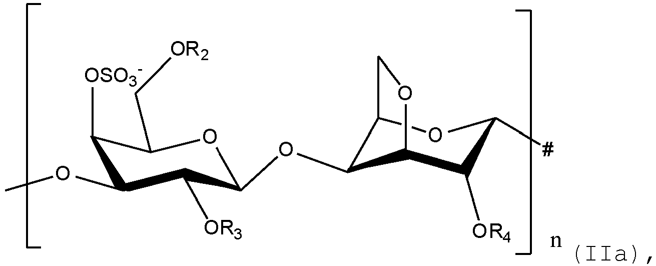 more preferably the modified algal polysaccharide comprising a repeating unit of kappa carrageenan.

Preferably the algal polysaccharide derivative comprising a repeating unit according to formula (IIb) 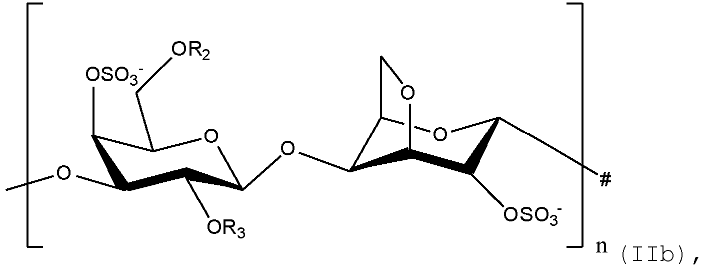 more preferably the algal polysaccharide derivative comprising a repeating unit of iota carrageenan.

Preferably the algal polysaccharide derivative comprising a repeating unit according to formula (IIIa) 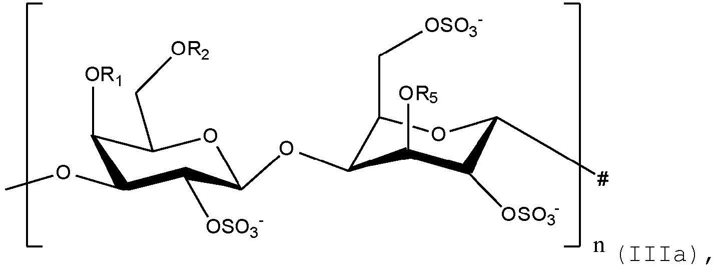 more preferably algal polysaccharide derivative comprising a repeating unit of lambda carrageenan.

The above-mentioned carrageenans (kappa and iota) have the benefit that resulting algal polysaccharide derivative has great potential as a gel-forming material. The algal polysaccharide derivative can form a gel through ionotropic gelation coupled to a mechanism that involves helix formation upon cooling and crosslinking in the presence of potassium or calcium ions. The algal polysaccharide derivative can be used as a gel to increase the viscosity of foods such as ice cream, sauces, and sweetened condensed milk. For example an algal polysaccharide derivative comprising a kappa-carageenan repeating unit (according to formula IIa) enables the formation of rigid and brittle gels, while an algal polysaccharide derivative comprising an iota-carrageenan repeating unit (according to formula IIb) enables the formation of softer, elastic and cohesive gels.

Preferably the algal polysaccharide derivative comprising a repeating unit according to formula (IVa) 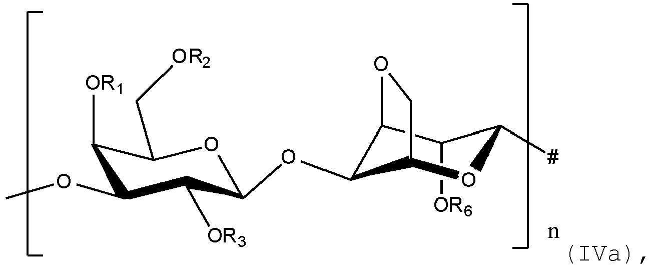 more preferably, the algal polysaccharide derivative comprising a repeating unit of agarose.

Preferably the algal polysaccharide derivative comprises a repeating unit according to formula (IIa) and/or a repeating unit according to formula (IIb) and/or a repeating unit according to formula (IIIa), wherein n is the number of repeating units in the algal polysaccharide and is between 400 and 1600,

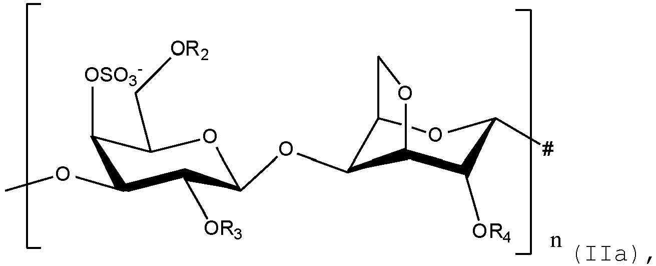

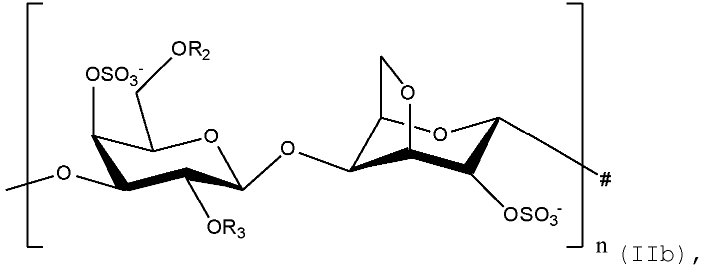

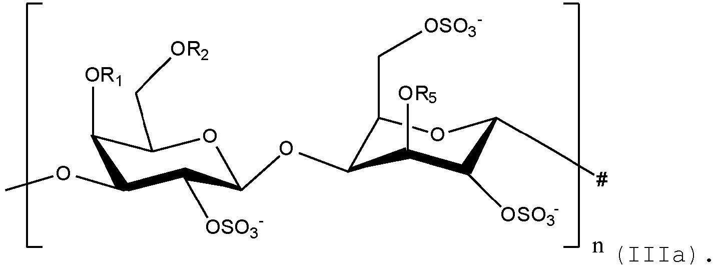

Generally, the algal polysaccharide derivative consists of repeating units, preferably at least 90% thereof are repeating units according to formula (IIa) or formula (IIb) or formula (IIIa).

In a preferred embodiment of the invention Y is present on average in each repeating unit 1.5 to 4.0 times, more preferably Y is present on average in each repeating unit 1.5 - 3.5 times, more preferably Y is present on average in each repeating unit 1.5 - 3.0 times, most preferably Y is present on average in each repeating unit 1.8 - 2.2 times in the algal polysaccharide derivative.

Preferably Y is a compound of formula (V), 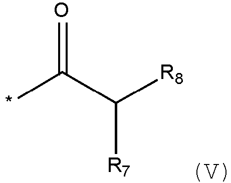 wherein R₇ is -H, and wherein R₈ is an C₆ - C₁₆ alkyl. To obtain an algal polysaccharide derivative wherein R₁, R₂, R₃, R₄, R₅ and/or R₆ are Y the compound of formula (V) is an octanoyl chloride, decanoyl chloride, dodecanoyl chloride, tetradecanoyl chloride, hexadecanoyl chloride, octadecanoyl chloride, octanoic anhydride, decanoic anhydride, dedecanoic anhydride, tetradecanoic anhydride, hexadecanoic anhydride or octadecanoic anhydride. It has surprisingly been found that these compounds enable the formation of a thermoplastic algal polysaccharide derivative.

Another aspect of the invention refers to a process for producing an algal polysaccharide derivative involving the steps:
providing an algal polysaccharide with a repeating unit selected from the group of formula (VI), (VII), (VIII) and (IX) or a mixture thereof, and 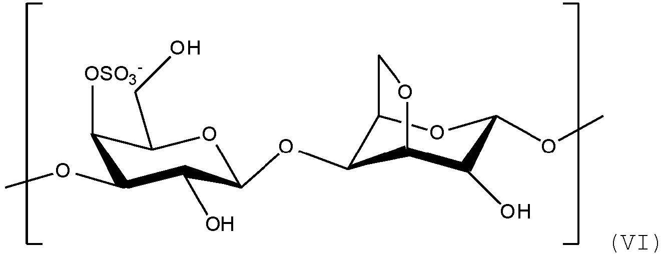 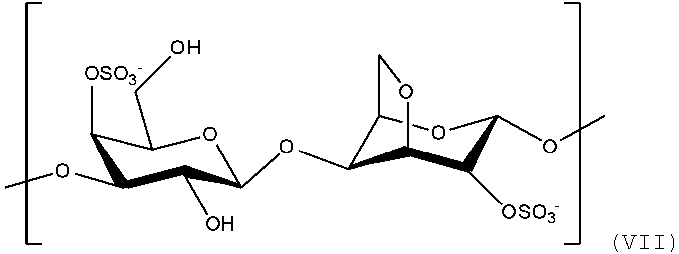 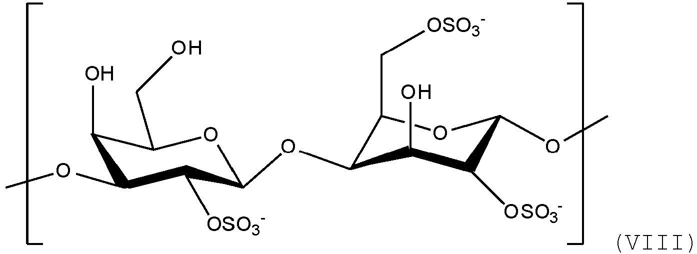 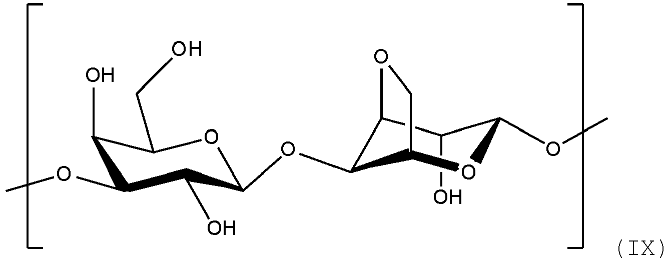
reacting the algal polysaccharide with an activated ester in a solvent to obtain an algal polysaccharide derivative with a repeating unit according to formula (I), 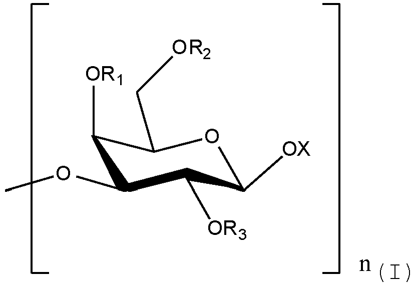
wherein X is one of the compounds of formula (II), (III) or (IV), 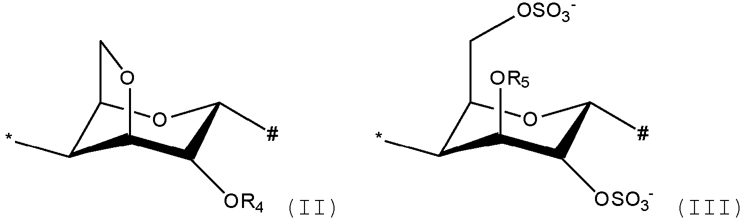 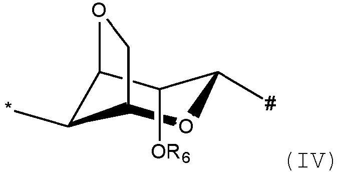
wherein R₁, R₃ and R₄ are independently selected from the group consisting of -H, -Y, and -SO₃⁻, and
wherein R₂, R₅ and R₆ are independently selected from the group consisting of -H and -Y, and
wherein Y is a compound of formula (V), 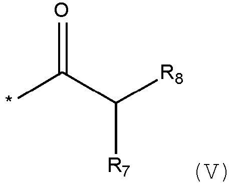
wherein R₇ is -H or -COO⁻, and
wherein R₈ is an C₆ - C₁₆ alkyl or a C₆ - C₁₆ alkenyl, and
wherein "*" denotes the point of attachment to the remainder of the molecule, and
wherein "#" denotes the point of attachment to a further repeating unit, and
wherein n is the number of repeating units in the algal polysaccharide and is between 400 and 1600, and
wherein Y is present on average in each repeating unit at least 0.8 times.

In the context of the invention the term "activated ester" refers to an ester in which the leaving group is modified to enhance the electrophilicity of the carbonyl carbon, making it more reactive toward nucleophiles such as amines.

The inventive process to produce an algal polysaccharide derivative produced an algal polysaccharide derivative with exceptional thermoplastic behavior, a processing temperature between 80 - 160 °C and the produced algal polysaccharide derivative is significantly hydrophobic.

In a preferred embodiment of the invention the activated ester is an acyl chloride or an anhydride. It has surprisingly been found that the above-mentioned compounds enable the formation of a thermoplastic algal polysaccharide derivative without the need for harsh reaction conditions.

Preferably the activated ester is selected from the group consisting of octanoyl chloride, decanoyl chloride, dodecanoyl chloride, tetradecanoyl chloride, hexadecanoyl chloride, octadecanoyl chloride, octanoic anhydride, decanoic anhydride, dedecanoic anhydride, tetradecanoic anhydride, hexadecanoic anhydride, octadecanoic anhydride, dodecenylsuccinicanhydride and a combination thereof. More preferably the activated ester is selected from the group consisting of octanoyl chloride, decanoyl chloride, dodecanoyl chloride, tetradecanoyl chloride, hexadecanoyl chloride, octadecanoyl chloride, octanoic anhydride, decanoic anhydride, dedecanoic anhydride, tetradecanoic anhydride, hexadecanoic anhydride, octadecanoic anhydride and a combination thereof. Most preferably the activated ester is selected from the group consisting of octanoic anhydride, decanoic anhydride, dedecanoic anhydride, tetradecanoic anhydride, hexadecanoic anhydride, octadecanoic anhydride and a combination thereof.

In a preferred embodiment of the invention Y is a compound of formula (V), 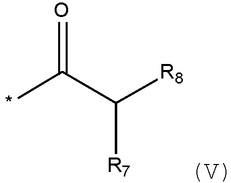
wherein R₇ is -H, and
wherein R₈ is an C₆ - C₁₆ alkyl. To obtain an algal polysaccharide derivative wherein R₁, R₂, R₃, R₄, R₅ and/or R₆ are Y the compound of formula (V) is an octanoyl chloride, decanoyl chloride, dodecanoyl chloride, tetradecanoyl chloride, hexadecanoyl chloride, octadecanoyl chloride, octanoic anhydride, decanoic anhydride, dedecanoic anhydride, tetradecanoic anhydride, hexadecanoic anhydride or octadecanoic anhydride. It has surprisingly been found that these compounds enable the formation of a thermoplastic algal polysaccharide derivative.

Preferably the solvent is selected from the group consisting of imidazole, pyridine, DMSO, DMF, acetonitrile, DMAc/LiCl or THF more preferably imidazole. It has surprisingly been found that these solvents enable a modification of the used algal polysaccharide under mild conditions. The use of imidazole has the advantage of being more hydrophilic compared to other solvents, which makes it more compatible with aqueous or mixed-solvent systems and, therefore, with biomolecules as algal polysaccharides. Also, imidazole is generally a better nucleophile than the other solvents due to the electron-rich nitrogen in the five-membered ring; this makes it more reactive in acylation reactions. It can also act as both a nucleophile and a base, and its dual role is especially useful in activation steps.

Another aspect of the invention refers to the use of an algal polysaccharide derivative for the production of mulch films, packaging films, adhesives or coating, preferably adhesive or coating.

Another aspect of the invention refers to a blend comprising up to 10 wt% of an algal polysaccharide derivative and more than 90 wt% of a filler, wherein the filler is selected from the group consisting of cellulose, starch and lignin.

Preferably the blend comprises 1 - 5 wt% of the algal polysaccharide derivative and 95 - 99 wt% of the filler.

In a preferred embodiment of the invention the filler is selected from the group consisting of unmodified algal polysaccharides, dried algae powder, dried algal residues, nanoclay, wood particles, wood fibers, microfibrillated cellulose, microcrystalline cellulose, nanocrystalline cellulose, lignin- or starch- or cellulose-based fibers and waste materials such as fibrous waste materials from potato, dried waste materials from potato, cassava pomace, spent grain corn, potato peel, calcium carbonate, titanium dioxide, and silicium dioxide, silicates, carbon and talcum.

Preferably the filler is selected from the group consisting of unmodified algal polysaccharides and dried algae powder. Examples for unmodified algal polysaccharides are agar, kappa carrageenan, iota carrageenan and lambda carrageenan.

Another aspect of the invention relates to a mixture of at least two algal polysaccharide derivatives, wherein a first algal polysaccharide derivative comprises a repeating unit according to formula (IVa) 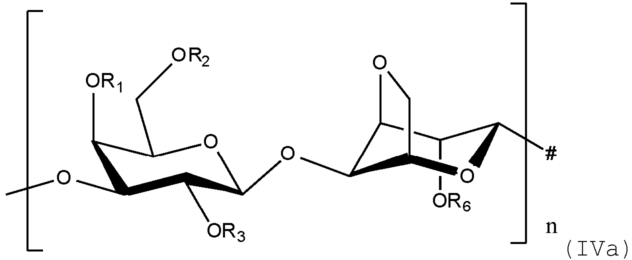
and wherein a second algal polysaccharide derivative comprises a repeating unit according to formula (Xa) 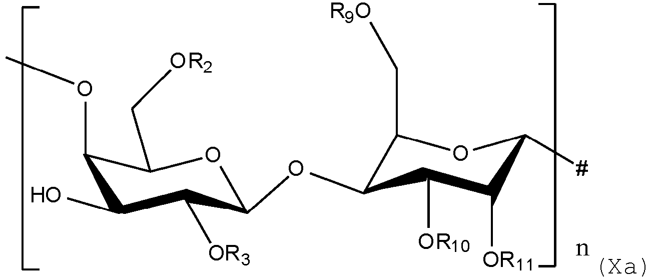
wherein R₉ is independently selected from the group consisting of -H, -Y, and -SO₃⁻, and
wherein R₁, R₂, R₃, R₆, R₁₀ and R₁₁ are independently selected from the group consisting of -H and -Y, and
wherein Y is a compound of formula (V), 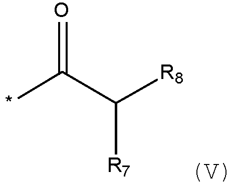
wherein R₇ is -H or -COO⁻, and
wherein R₈ is an C₆ - C₁₆ alkyl or a C₆ - C₁₆ alkenyl, and
wherein "*" denotes the point of attachment to the remainder of the molecule, and
wherein "#" denotes the point of attachment to a further repeating unit, and
wherein n is the number of repeating units in the algal polysaccharide and is between 400 and 1600, and
wherein Y is present on average in each repeating unit at least 0.8 times.

The inventive mixture of at least two algal polysaccharide derivatives has an exceptional thermoplastic behavior, a processing temperature between 80 - 160 °C, a rheological behavior comparable to Poly(methyl methacrylate) (PMMA) and is significantly hydrophobic.

Another aspect of the invention refers to a process for producing a mixture of at least two algal polysaccharide derivatives involving the steps:
providing a mixture of at least two algal polysaccharides, wherein a first algal polysaccharide comprises a repeating unit according to formula (IX), 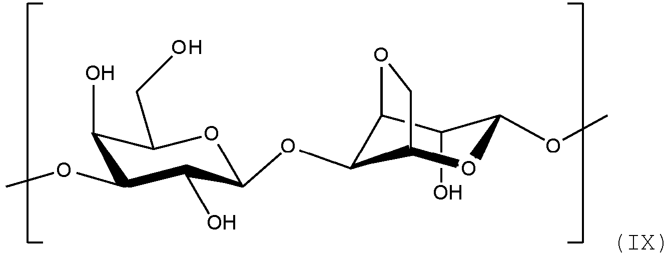
and a second algal polysaccharide comprises a repeating unit according to formula (X), 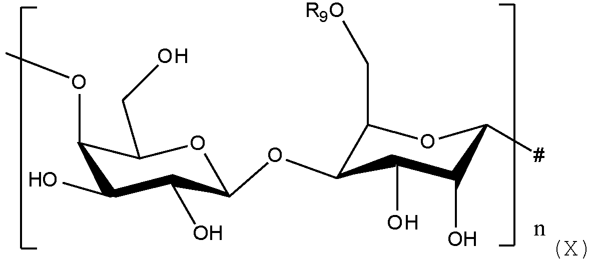
wherein R₉ is independently selected from the group consisting of -H, and -SO₃⁻, and
reacting the mixture of at least two algal polysaccharide derivatives with an activated ester in a solvent to obtain a mixture of at least two algal polysaccharide derivatives, wherein a first algal polysaccharide derivative comprises a repeating unit according to formula (IVa) 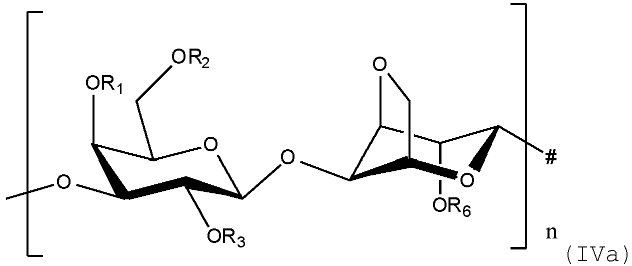
and wherein a second algal polysaccharide derivative comprises a repeating unit according to formula (Xa) 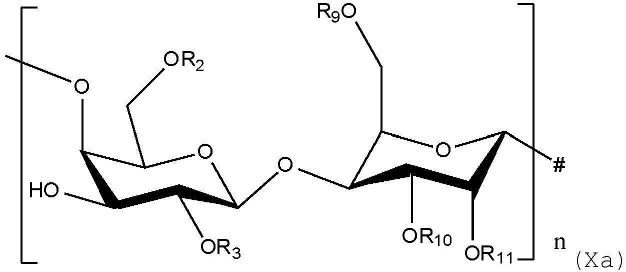
wherein R₉ is independently selected from the group consisting of -H, -Y, and -SO₃⁻, and
wherein R₁, R₂, R₃, R₆, R₁₀ and R₁₁ are independently selected from the group consisting of -H and -Y, and
wherein Y is a compound of formula (V), 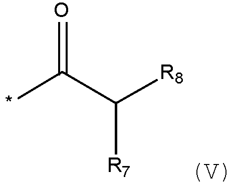
wherein R₇ is -H or -COO⁻, and
wherein R₈ is an C₆ - C₁₆ alkyl or a C₆ - C₁₆ alkenyl, and
wherein "*" denotes the point of attachment to the remainder of the molecule, and
wherein "#" denotes the point of attachment to a further repeating unit, and
wherein n is the number of repeating units in the algal polysaccharide and is between 400 and 1600, and
wherein Y is present on average in each repeating unit at least 0.8 times.

The inventive process to produce a mixture of at least two algal polysaccharide derivatives produced a mixture of at least two algal polysaccharide derivatives with exceptional thermoplastic behavior, a processing temperature between 80 - 160 °C, a rheological behavior comparable to Poly(methyl methacrylate) (PMMA) and the produced algal polysaccharide derivative is significantly hydrophobic. Furthermore, it was surprisingly found that a complex algal polysaccharide pretreatment, which is usually performed to separate the algal polysaccharide of formula (IV) from the algal polysaccharide of formula (X) is not required with this process since the resulting mixture of at least two algal polysaccharide derivatives is thermoplastic.

### EXPERIMENTAL DATA

### General experimental setup

The algal polysaccharide is mixed with the activated ester in imidazole according to the ratio disclosed in Table 1. The mixture is heated to 100 °C and stirred for 1 - 2 hours. Afterwards the mixture is cooled down, the algal polysaccharide derivative is isolated and analyzed.

### Degree of substitution

The degree of substitution (DOS) is determined with NMR and the thermoplasticity is tested.

### Thermal properties

The thermal properties were evaluated through Differential Scanning Calorimetry (DSC TA25) and all the tests were carried out under a nitrogen atmosphere. For the heating cycle the powder was heated from 25 °C to 250 °C at a rate of 3 °C/ min. For the complete cycle (heating and cooling) the powder was heated from 25 °C to 180 °C at a rate of 3 °C/ min and then cooled down to 25 °C at the same rate. The complete cycle plus an additional second heating up to 250 °C was performed to evaluate the ability of the material to be re-heated multiple times without changing its chemical structure, its thermal properties, and without significant degradation.

### Rheology profiles

The temperature-dependent viscosity of the algal polysaccharide derivative was evaluated using a plate-to-plate configuration on a Discovery HR 30 rheometer (TA Instruments). A plate diameter of 25 mm with a fixed gap of 1 mm was employed. Measurements were conducted at temperatures of 130°C, 140°C, 150°C, and 160°C, under ambient air atmosphere. The material was subjected to an oscillatory shear within an angular frequency range of 0.1 to 600 rad/s to determine its complex viscosity.

### Tensile testing

Tensile testing was conducted in accordance with ISO 527-3:2018, with adaptations suitable for thin film specimens (<1 mm thickness). The films were dried at 50 °C for 24 hours prior to testing to eliminate residual moisture. Rectangular specimens were cut to standardized dimensions permitted by the norm and subsequently conditioned at 23 °C and 50 % relative humidity for a minimum of 4 hours before testing. Tests were carried out on a Zwick Roell universal testing machine equipped with a 1 kN load cell, providing the required resolution for low-force measurements. The test sequence began with a crosshead speed of 5 mm/min to determine Young's modulus within the initial linear elastic region. After this phase, the machine automatically transitioned to a higher test speed of 100 mm/min to complete the full stress-strain analysis, enabling accurate assessment of tensile strength and elongation at break.

### Hot Press experimental procedure

A release agent (Zyvax WaterShield) is first applied twice to a steel sheet. The algal polysaccharide derivative is then placed on the treated steel surface. The Vogt press is preheated to 120°C, after which the plates are inserted to allow the material to begin heating under a low pressure of 40 bar. After a 3-minute preheating phase, the pressure is gradually increased and maintained at 40 bar for 2 minutes. The mold is then transferred to the lower section of the press to cool under pressure-typically around 300 bar-until it reaches 20°C, which takes approximately 10 minutes. Once cooled, the film is released from the mold. The result indicates that only low pressure is required at 125°C to properly form the film.

### Produced algal polysaccharide derivatives

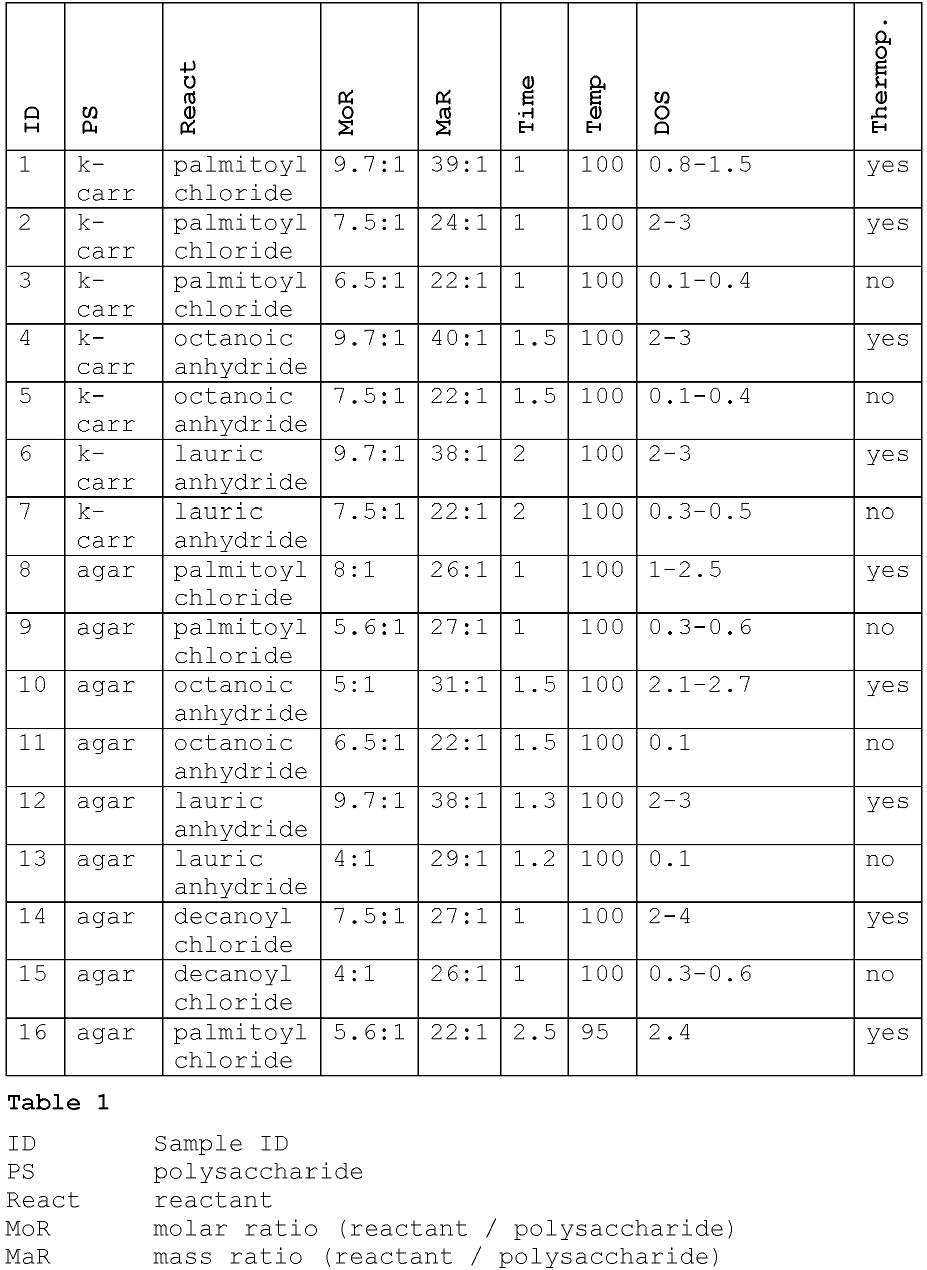

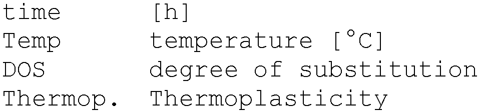

### Specific Example 1 (ID 1 of Table 1)

20 g of Imidazole was melted at 105°C in a glass vessel under stirring; thus 0.5 g of dried k-Carrageenan (WG2000) was added to the molten imidazole and kept for one hour at 100 °C and stirring. 4 mL Palmitoyl chloride was added under nitrogen to the reaction vessel dropwise.

After 1h, the reaction was stopped and the mixture was allowed to cool down for 5 min. Thus, the system was opened and reaction quenched with 200 mL of isopropanol. The product was allowed to settle and successively recovered by filtration. The product was further washed with additional 200 mL of isopropanol. Finally, the product was dried at 60 °C in the oven for 24h. The final product appeared as a thermoplastic: it was melting on the Kofler bench at 115 °C and then solidifying and hardening under cooling; also, the material was able to undergo the mentioned cycle (heating-cooling) several times without changing its chemical properties.

FTIR-ATR: C=O stretching vibration indicating ester peak of palmitate at 1736.86 cm⁻¹, C-H stretching vibrations of palmitic chains at 2850-2920 cm⁻¹. DSC: endothermic transition indicating melting point of material at 113.84 °C. DOS (1H-NMR): 0.8 - 1.5.

### Specific Example 2 (scale up of experiment 1)

40 g of Imidazole was melted at 105°C in a glass vessel under stirring; thus 1.06 g of dried k-Carrageenan (WG2000) was added to the molten imidazole and kept for one hour at 100 °C and stirring. 8 mL Palmitoyl chloride was added under nitrogen to the reaction vessel dropwise. After 1h, the reaction was stopped and the mixture was allowed to cool down for 5 min. Thus, the system was opened and reaction quenched with 400 mL of isopropanol. The product was allowed to settle and successively recovered by filtration. The product was further washed with additional 200 mL of isopropanol. Finally, the product was dried at 60 °C in the oven for 24h. The final product appeared as a thermoplastic: it was melting on the Kofler bench at 103 °C and then solidifying and hardening under cooling; also, the material was able to undergo the mentioned cycle (heating-cooling) several times without changing its chemical properties.

FTIR-ATR: C=O stretching vibration indicating ester peak of palmitate at 1736.91 cm⁻¹, C-H stretching vibrations of palmitic chains at 2850-2920 cm⁻¹. DSC: endothermic transition indicating melting point (Tm) of material at 102.36 °C. DMA: glass transition temperature (Tg) at 76 °C. Hot press: material made a transparent sheet (P and T to be checked). Rheometry: elastic material. DOS (1H-NMR): 0.8 - 1.5.

### Specific Example 3 (ID 2 of Table 1)

24 g of Imidazole was melted at 105°C in a glass vessel under stirring; thus 1 g of dried k-Carrageenan (WG2000) was added to the molten imidazole and kept for one hour at 100 °C and stirring. 5.9 mL Palmitoyl chloride was added under nitrogen to the reaction vessel dropwise. After 1h, the reaction was stopped and the mixture was allowed to cool down for 5 min. Thus, the system was opened and reaction quenched with 400 mL of isopropanol. The product was allowed to settle and successively recovered by filtration. The product was further washed with additional 200 mL of isopropanol. Finally, the product was dried at 55 °C in a vacuum oven for 18h. The final product appeared as a thermoplastic: it was melting on the Kofler bench at 105 °C and then solidifying and hardening under cooling; also, the material was able to undergo the mentioned cycle (heating-cooling) several times without changing its chemical properties.

FTIR-ATR: C=O stretching vibration indicating ester peak of palmitate at 1737.62 cm⁻¹, C-H stretching vibrations of palmitic chains at 2850-2920 cm⁻¹. DSC: endothermic transition indicating melting point (Tm) of material at 106.83 °C. DMA: glass transition temperature (Tg) at 78 °C. Hot press: material made a transparent sheet (P and T to be checked). Rheometry: elastic material. DOSapp: 2.5, by 1H NMR.

### Specific Example 4 (ID 10 of Table 1)

31 g of Imidazole was melted at 105°C in a glass vessel under stirring; thus 1.1 g of dried Agar (OLES50) was added to the molten imidazole and kept for one hour at 100 °C and stirring. Thus, 4.8 mL octanoic anhydride was added under nitrogen to the reaction vessel dropwise. After 1.5h, the reaction was stopped and the mixture was allowed to cool down for 5 min.

Thus, the system was opened and reaction quenched with 500 mL of isopropanol. The product was allowed to settle and successively recovered by filtration. The product was further washed with additional 200 mL of isopropanol. Finally, the product was dried at 55 °C in a vacuum oven for 18h. The final product appeared as a thermoplastic: it was melting on the Kofler bench at 115 °C and then solidifying and hardening under cooling; also, the material was able to undergo the mentioned cycle (heating-cooling) several times without changing its chemical properties.

FTIR-ATR: C=O stretching vibration indicating ester peak of octanoate at 1740.73 cm⁻¹, C-H stretching vibrations of octanoic chains at 2855-2924 cm⁻¹. DSC: endothermic transition indicating melting point (Tm) of material at 117-131 °C. DOSapp: 2.7, by 1H NMR.

### Specific example 5 (ID 16 of Table 1)

310 g of Imidazole was melted at 95 °C in a 1000 mL Batch Reactor under overhead stirring; thus 14.1 g of dried Agar (OLES50) was added to the molten imidazole and kept for one hour at constant temperature and stirring. Thus, 71 mL of palmitoyl chloride was added under nitrogen to the Batch Reactor dropwise.

After 2.5h, the heating was stopped and the reactor opened to allow the mixture to cool down. After 10 min the reaction mixture was quenched with 600 mL of isopropanol. The product was recovered and washed with a total amount of 3L IPA by Büchner filtration. Finally, the product was dried at 55 °C in a vacuum oven for 18h. The final product presented a weight of 47 g and appeared as a thermoplastic material: it presented a MFR (Melt Flow Rate) value of 2.63 g/10 min when tested at 125 °C with a weight of 2.6 Kg, and a value of 50.64 g/10 min when tested at 150 °C with a weight of 1.2 Kg. Also, to assess an hydrophobicity evaluation, the material was tested for Water Contact Angle measurements (according to ASTM D 5946-04) and it presented a value of (109.45 ± 0.96) °.

FTIR-ATR: C=O stretching vibration indicating ester peak of palmitate at 1742.15 cm-1, C-H stretching vibrations of palmitic chains at 2851-2920 cm-1. DOSapp: 2.4 (by 1H NMR-FTIR correlation).

## Claims

1. Algal polysaccharide derivative comprising a repeating unit according to formula (I) 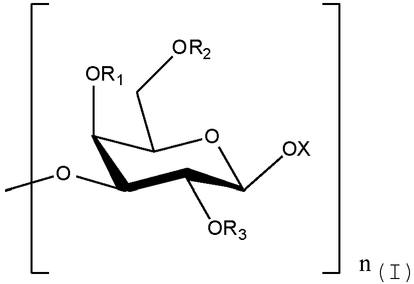
wherein X is one of the compounds of formula (II), (III) or (IV), 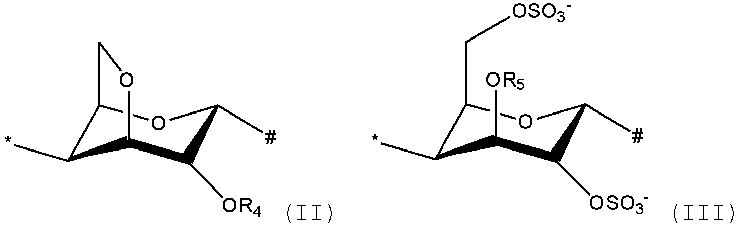 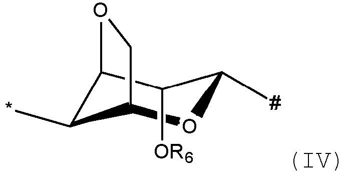
wherein R₁, R₃ and R₄ are independently selected from the group consisting of -H, -Y, and -SO₃⁻, and
wherein R₂, R₅ and R₆ are independently selected from the group consisting of -H and -Y, and
wherein Y is a compound of formula (V), 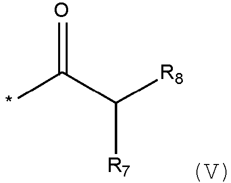
wherein R₇ is -H or -COO⁻, and
wherein R₈ is an C₆ - C₁₆ alkyl or a C₆ - C₁₆ alkenyl, and
wherein "*" denotes the point of attachment to the remainder of the molecule, and
wherein "#" denotes the point of attachment to a further repeating unit, and
wherein n is the number of repeating units in the algal polysaccharide and is between 400 and 1600, and
wherein Y is present on average in each repeating unit at least 0.8 times.

2. Algal polysaccharide derivative according to Claim 1, wherein Y is present on average in each repeating unit 1.5 to 4.0 times, more preferably Y is present on average in each repeating unit 1.5 - 3.0 times.

3. Algal polysaccharide derivative according to one of the Claims 1 or 2, wherein Y is a compound of formula (V), 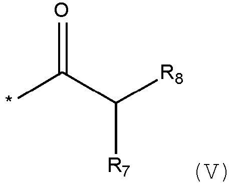
wherein R₇ is -H, and
wherein R₈ is an C₆ - C₁₆ alkyl.

4. Process for producing an algal polysaccharide derivative according to one of the preceding Claims involving the steps:
providing an algal polysaccharide with a repeating unit selected from the group of formula (VI), (VII), (VIII) and (IX) or a mixture thereof, and 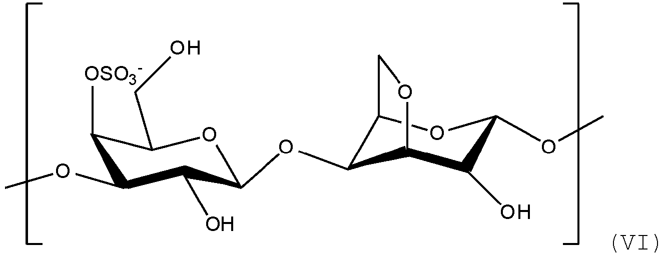 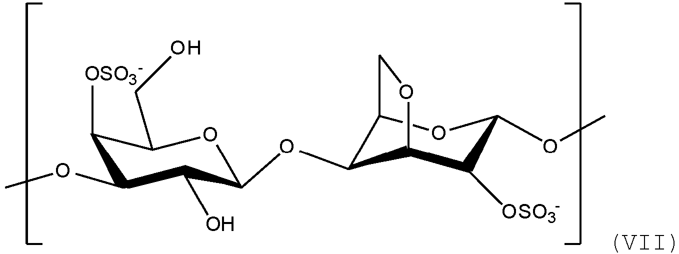 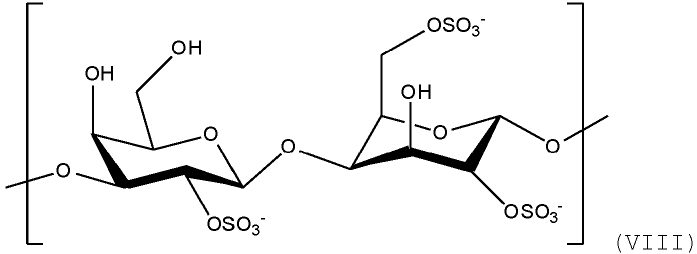 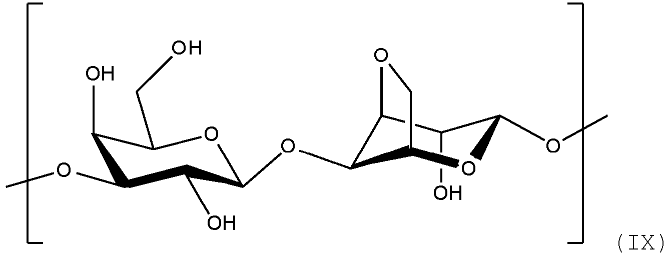
reacting the algal polysaccharide with an activated ester in a solvent to obtain an algal polysaccharide derivative with a repeating unit according to formula (I), 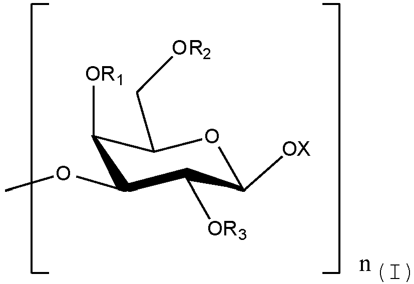
wherein X is one of the compounds of formula (II), (III) or (IV), 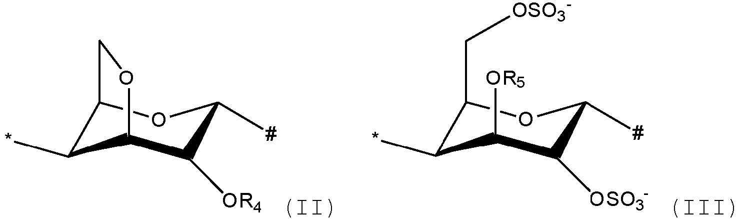 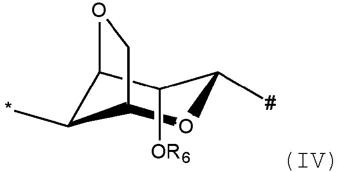
wherein R₁, R₃ and R₄ are independently selected from the group consisting of -H, -Y, and -SO₃⁻, and
wherein R₂, R₅ and R₆ are independently selected from the group consisting of -H and -Y, and
wherein Y is a compound of formula (V), 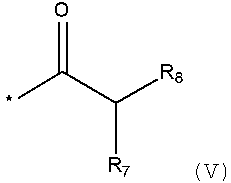
wherein R₇ is -H or -COO⁻, and
wherein R₈ is an C₆ - C₁₆ alkyl or a C₆ - C₁₆ alkenyl, and
wherein "*" denotes the point of attachment to the remainder of the molecule, and
wherein "#" denotes the point of attachment to a further repeating unit, and
wherein n is the number of repeating units in the algal polysaccharide and is between 400 and 1600, and
wherein Y is present on average in each repeating unit at least 0.8 times.

5. Process according to Claim 4, wherein the activated ester is an acyl chloride or an anhydride.

6. Process according to Claim 4, wherein the activated ester is selected from the group consisting of octanoyl chloride, decanoyl chloride, dodecanoyl chloride, tetradecanoyl chloride, hexadecanoyl chloride, octadecanoyl chloride, octanoic anhydride, decanoic anhydride, dedecanoic anhydride, tetradecanoic anhydride, hexadecanoic anhydride, octadecanoic anhydride, dodecenylsuccinicanhydride and a combination thereof.

7. Process according to Claim 4, wherein Y is a compound of formula (V), 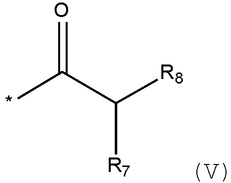
wherein R₇ is -H, and
wherein R₈ is an C₆ - C₁₆ alkyl.

8. Process according to one of Claims 4 to 7, wherein the solvent is selected from the group consisting of imidazole, pyridine, DMSO, DMF, acetonitrile, DMAc/LiCl or THF, more preferably imidazole.

9. Use of an algal polysaccharide derivative according to one of the Claims 1 to 3 for the production of mulch films, packaging films, adhesives, coatings, hair styling products, hydrating films in cosmetics, textile coatings, bioink, biodegradable mold release agents, seed coatings, protection films for flavors, protection films for probiotics or protection films for nutrients, preferably for the production of mulch films, packaging films, adhesives or coatings.

10. A blend comprising up to 10 wt% of an algal polysaccharide derivative according to one of the Claims 1 to 3 and more than 90 wt% of a filler, wherein the filler is selected from the group consisting of cellulose, starch and lignin.

11. The blend according to Claim 10, wherein the blend comprises 1 - 5 wt% of the algal polysaccharide derivative and 95 - 99 wt% of the filler.

12. The blend according to one of the Claims 10 or 11, wherein the filler is selected from the group consisting of unmodified algal polysaccharides, dried algae powder, dried algal residues, nanoclay, wood particles, wood fibers, microfibrillated cellulose, microcrystalline cellulose, nanocrystalline cellulose, lignin- or starch- or cellulose-based fibers and waste materials such as fibrous waste materials from potato, dried waste materials from potato, cassava pomace, spent grain corn, potato peel, calcium carbonate, titanium dioxide, and silicium dioxide, silicates, carbon and talcum.
